# EUROPÄISCHE PATENTANMELDUNG

(11) **EP 0 788 056 A1**
(43) Veröffentlichungstag der Anmeldung: **06.08.1997**
(21) Anmeldenummer: 97101148.1
(22) Anmeldetag: 24.01.1997
(51) Int. Cl.: G06F 13/364

(54) **Verfahren und Anordnung zum Zuteilen von Zugriffszyklen auf einen Bus eines Mikroprozessorsystems**

(30) Priorität: 31.01.1996 DE 19603442
(71) Anmelder: SIEMENS AKTIENGESELLSCHAFT, 80333 München (DE)
(72) Erfinder: Glade, Martin, Dr.-Ing., 81545 München (DE); Simburger, Rudolf, Dipl.-Ing., 85774 Unterföhring (DE)

(57) **Zusammenfassung**

Derjenigen Systemeinheit (SE1..4) mit der aktuell höchsten Priorität (pr1..4) wird ein Zugriffszyklus auf einen gemeinsamen Bus (MB) eines Mikroprozessorsystems (MPS) zugeteilt. Während des aktuellen Zugriffs wird die Priorität (pr1..4) derjenigen einen Zugriff anfordernden weiteren Systemeinheit (SE1..4) um einen vorgegebenen Wert erhöht und die Priorität (pr1..4) der aktuell zugreifenden Systemeinheit (SE1..4) auf einen bestimmten Wert zurückgesetzt. Das erfindungsgemäße Zuteilverfahren ist für Systemeinheiten (SE1..4) mit seltenen und häufigen Zugriffszyklen vorgesehen.

## Beschreibung

Die Erfindung bezieht sich auf ein Verfahren zum Zuteilen von Zugriffszyklen auf einen Bus eines Mikroprozessorsystems, bei dem Zugriffszyklen von mit dem Bus verbundenen Systemeinheiten mit Hilfe einer Zuteileinrichtung unter Berücksichtigung aktuell ermittelter Prioritäten gesteuert werden.

Mikroprozessorsysteme benutzen häufig einen gemeinsamen Datenbus zum Austausch von Informationen. Die Berechtigung zum Zugriff auf den Bus wird durch eine Zuteileinrichtung (Arbiter) gesteuert, die Anfragen der an den Bus angeschlossenen Systemeinheiten bewertet und den priorisierten Zugriff nach einem festgelegten Protokoll vergibt. Dieses Protokoll wird schaltungstechnisch realisiert, da die Anforderungen an die Leistungsfähigkeit des Mikroprozessorsystems hinsichtlich Verarbeitungsgeschwindigkeit keine Softwarelösung zulassen und Hardwarelösungen mit geringem Aufwand realisierbar sind. Aus der Druckschrift 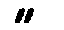 Intel 80386EX Users Manual" (Kap. 16.2.4, S. 16 - 6, February 1995) sind zweierlei Methoden für die Vergabe von Prioritäten bekannt. Diese können entweder fest an Systemeinheiten vergeben werden oder variieren, in dem eine 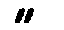 höchste Priorität" in einem gemeinsamen Schieberegister zyklisch rotiert. Hierbei wird nach jedem Zugriffszyklus auf den Bus die 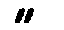 höchste Priorität" an die im Schieberegister folgende Systemeinheit gesteuert, so daß die Prioritäten aller am Schiedsverfahren beteiligter Systemeinheiten verändert werden. Ein derartiges Priorisierungsprotokoll fuhrt zu einem gleichberechtigten Zugriff auf den Bus, d.h. die Wartezeiten aller Systemeinheiten sind im statistischen Mittel gleich lang, bis ihnen der Zugriff auf den Bus gewährt wird.

Die vorhergehenden Priorisierungsschemata können für spezielle Anwendungsfälle ungeeignet sein. Als Beispiel diene ein Mikroprozessorsystem, welches von einem Mikroprozessor mit separaten Programmspeicher gesteuert wird, und das an einem Port des Mikroprozessorsystems ankommende Daten über einen gemeinsamen Speicher vermittelt und an einen anderen Port wieder ausgibt (Router). Die Daten werden über mehrere an den Bus angeschlossene Systemeinheiten direkt über den gemeinsamen Speicher ausgetauscht. Dieser wird gelegentlich zu Prüfzwecken vom Mikroprozessor angesteuert. Die einzelnen Prüfschritte müssen, um lange Warteperioden zu vermeiden, eine hohe Priorität besitzen. Da die im Mikroprozessor ablaufende Software nicht bekannt ist, ist eine Abschätzung der Häufigkeit und der zeitlichen Dauer der Speicher-Prüfschritte nicht möglich. So kann eine feste Vergabe der höchsten Priorität für den Prozessor im ungünstigsten Fall ein Blockieren des Datenaustausches der restlichen Systemeinheiten nach sich ziehen.

Die der Erfindung zugrundeliegende Aufgabe ist darin zu sehen, ein Verfahren zum Zuteilen von seltenen und häufigen Buszugriffen derart auszugestalten, daß ein fast vollständiges Blockieren von mit Datentransfer beschäftigten Systemeinheiten vermieden wird. Die Aufgabe wird ausgehend von einem Verfahren gemäß den Merkmalen des Oberbegriffs des Patentanspruchs 1 durch dessen kennzeichnende Merkmale gelöst.

Der wesentliche Aspekt des erfindungsgemäßen Verfahrens besteht darin, den Buszugriff von mit einem gemeinsamen Bus verbundenen Systemeinheiten unter Berücksichtigung aktuell ermittelter Prioritäten zu steuern. Dies bedeutet, daß für jede an den Bus angeschlossene Systemeinheit beispielsweise mit Hilfe eines Prioritätenzählers und eines Prioritätenvergleichers Prioritäten gesteuert werden. Bei der Initialisierung des Mikrocomputersystems wird jeder Systemeinheit eine unterschiedliche Priorität zugeordnet. Die Priorität wird hierbei mit Hilfe der Zähler nach jedem Zugriffszyklus erhöht, wenn beim aktuellen Zugriff der Bus an eine Systemeinheit mit einer im vorherigen Zugriffszyklus höheren Priorität vergeben wurde. Die Erhöhung der Prioritäten ist absolut zu betrachten, d.h. eine Erhöhung der Prioritäten kann sowohl durch eine Erhöhung als auch durch eine Erniedrigung der Prioritätenzählerstände bewirkt werden. Bei einer Erniedrigung der Prioritätenzählerstände besitzt die Systemeinheit mit dem zugeordneten niedrigsten Prioritätenzählerstand die höchste Priorität und umgekehrt. Die Priorität wird zurückgesetzt, d.h. der Zähler wird zu Null oder auf einen Maximalwert gesetzt - Anspruch 2 -, wenn der zugeordneten Systemeinheit im aktuellen Zugriffszyklus der Buszugriff zugeteilt wurde. Ansonsten bleibt die Priorität und damit der Zählerstand unverändert. Vorteilhaft werden die den Systemeinheiten zugeordneten Prioritäten um ganzzahlige, fest vorgegebene Werte - insbesondere um den Wert ± 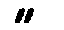 Eins" - verändert - Anspruch 2. Hierdurch sind besonders wirtschaftliche Realisierungen durch handelsübliche integrierte Schaltungen möglich. Der wesentliche Vorteil des erfindungsgemäßen Verfahrens besteht darin, daß den Systemeinheiten, die seltener als die anderen den Buszugriff beanspruchen, im Mittel eine höhere Priorität zugeteilt wird, da deren Priorität bei jedem Zugriff einer anderen Systemeinheit erhöht wird.

Eine vorteilhafte Ausgestaltung einer Zuteileinrichtung ist einem weiteren Anspruch - Anspruch 3 - zu entnehmen. Das erfindungsgemäße Verfahren ist vollständig in einer Zuteileinrichtung, d.h. einem eingangs angegebenen Arbiter schaltungstechnisch realisierbar.

Im folgenden wird das erfindungsgemäße Verfahren anhand einer Systemübersicht und anhand eines Blockschaltbildes eines Ausführungsbeispieles der Zuteileinrichtung ZTE näher erläutert. Dabei zeigt:
- Fig. 1: eine Anordnung von Systemeinheiten eines Mikroprozessorsystems, in der das erfindungsgemäße Verfahren implementiert ist, und
- Fig. 2: den Aufbau einer Anordnung zum Durchführen des erfindungsgemäßen Verfahrens.

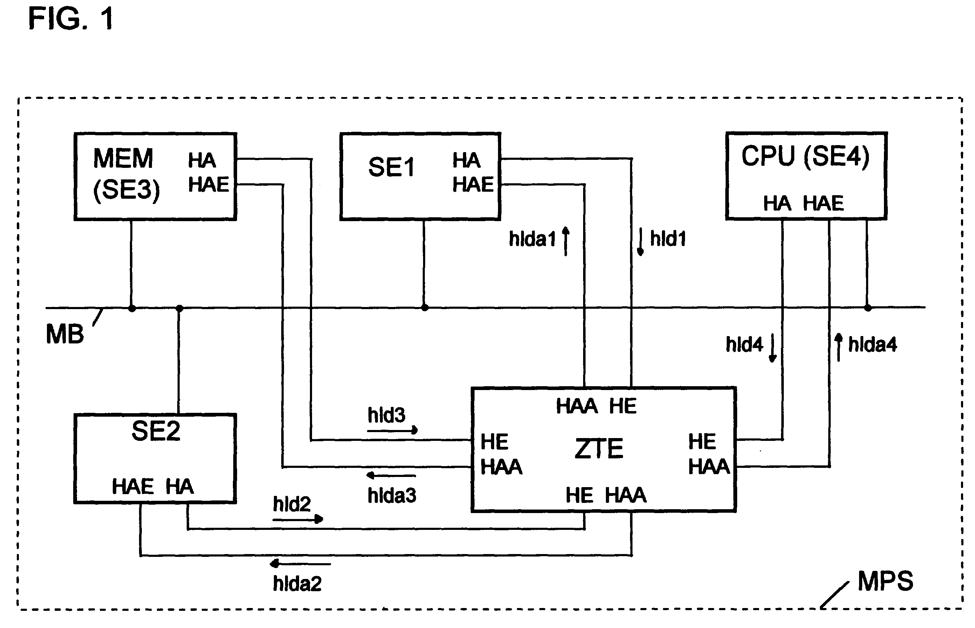

Fig. 1 zeigt beispielhaft den schematischen Aufbau eines Mikroprozessorsystems MPS, welches einen gemeinsamen Bus MB mit angeschlossenen gemeinsamen Datenspeicher MEM zum Austausch von Informationen umfaßt. Desweiteren sind mehrere Systemeinheiten SE mit dem Bus verbunden, wobei beispielsweise an einen Port SE1 einer Systemeinheit ankommende Daten über den gemeinsamen Speicher MEM vermittelt und an einen anderen Port SE2 einer weiteren Systemeinheit wieder ausgegeben werden. Gesteuert wird das Mikroprozessorsystem MPS von einem Prozessor CPU, der beispielsweise durch einen Intel 80386EX-Prozessor realisiert ist. Dieser greift gelegentlich zu Prüfzwecken auf den gemeinsamen Datenspeicher MEM zu. Jede der an den gemeinsamen Bus angeschlossenen Einheiten SE1..4 weist einen HOLD-Ausgang HA1..4, der jeweils mit einem HOLD-Eingang HE1..4 der Zuteileinrichtung ZTE verbunden ist, und einen HOLD-Acknowledge-Eingang HAE1..4 auf, der mit einem HOLD-Acknowldege-Ausgang HAA1..4 der Zuteileinrichtung ZTE verbunden ist. Die Zugriffe auf den Bus MB werden durch eine Zuteileinrichtung ZTE nach einem festgelegten Protokoll geregelt. Die Systemeinheiten SE1..4 können durch Übermitteln eines HOLD-Signals hld1..4 über den jeweiligen HOLD-Ausgang HA1..4 den Zugriff auf den Bus beanspruchen. Die Zuteileinrichtung ZTE ermittelt aus den HOLD-Signale hld1..4 übermittelnden Systemeinheiten SE1..4 diejenige Systemeinheit SE1..4 mit der höchsten Priorität und erteilt dieser durch Übermitteln eines HOLD-Acknowledge-Signals hlda1..4 den Zugriff auf den Bus.

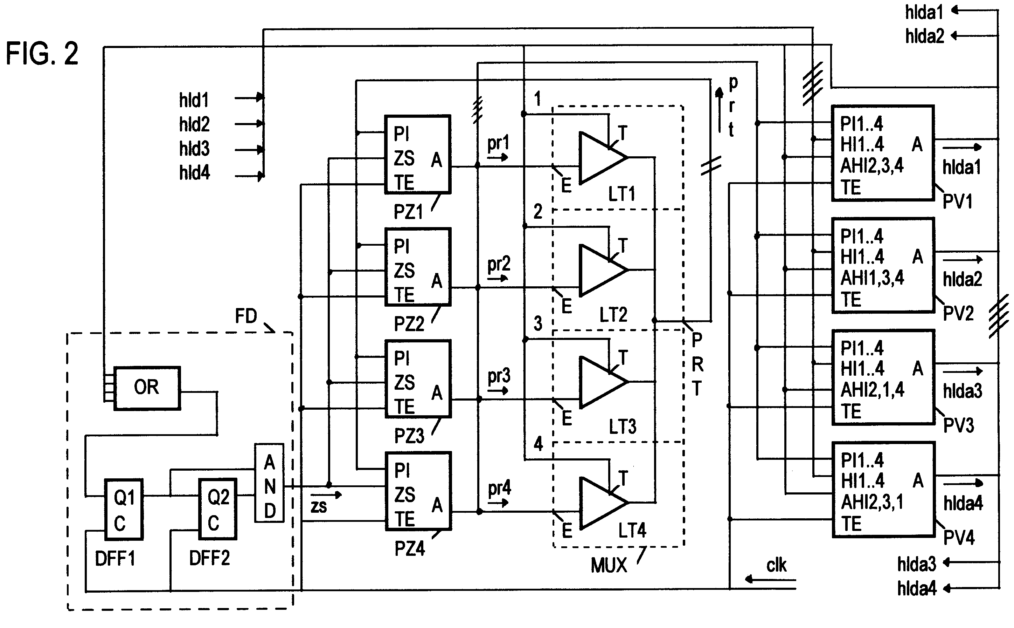

Fig. 2 zeigt beispielhaft diejenigen Systemkomponenten einer Zuteileinrichtung ZTE, die zum Durchführen des erfindungsgemäßen Verfahrens erforderlich sind. In dieser Zuteileinrichtung ZTE ist jeder der in Figur 1 gezeigten Systemeinheiten SE1..4 ein eigener Prioritätenzähler PZ1..4 und Prioritätenvergleicher PV1..4 zugeordnet. Die von den Systemeinheiten SE1..4 ausgehenden HOLD-Signale hld1..4 werden über Verbindungsleitungen jeweils allen Prioritätsvergleichern PV1..4 zugeführt, wozu die Verbindungsleitungen jeweils mit einem HOLD-Eingang HI1..4 der Prioritätenvergleicher PV1..4 verbunden sind. Desweiteren werden die an den jeweiligen Ausgängen A der Prioritätenzähler PZ1..4 anliegenden binären Prioritätenzählerstände pr1..4 über entsprechende Verbindungen an jeweils einen Prioritäteneingang PI1..4 von allen Prioritätenvergleichern PV1..4 gefuhrt. Bei dem in Fig. 1 und in Fig. 2 gezeigten Ausführungsbeispiel sind insgesamt vier Einheiten SE1..4 an den gemeinsamen Bus angeschlossen. Für die sich daraus resultierende binäre Codierung der in diesem Falle vier unterschiedlichen Prioritäten pr1..4 sind somit zweistellige Binärinformationen notwendig, so daß für die Übertragung der einzelnen Prioritätenzählerstände pr1..4 jeweils zwei Leitungen erforderlich sind. Als weiteres Eingangssignal werden jedem Prioritätenvergleicher PV1..4 ausgangsseitige HOLD-Acknowledge-Signale hlda1..4 der jeweils anderen Prioritätenvergleicher PV1..4 zugeführt. Hierzu sind jeweils die Ausgänge A der anderen Prioritätenvergleicher PV1..4 mit einem Eingang AHI1..4 eines Prioritätenvergleichers PV1..4 verbunden. Zusätzlich wird an jeden Prioritätenvergleicher PV1..4 über einen Takteingang TE ein Systemtakt clk geführt. In den Prioritätenvergleichern PV1..4 werden die von den Einheiten SE1..4 ausgehenden HOLD-Signale hld1..4 und die dazugehörigen aktuellen Prioritätszählerstände pr1..4 bewertet und als Bewertungsergebnis ein HOLD-Acknowledge-Signal hlda1..4 gebildet. Ein HOLD-Acknowledge-Signal hlda1..4 für eine Einheit SE1..4 wird gebildet, wenn von dieser Einheit SE1..4 ein HOLD-Signal hld1..4 und kein weiters aktuelles HOLD-Acknowledge-Signal hlda1..4 vorliegt und dessen zugeordneter Prioritätenzähler PZ1..4 den höchsten Zählerstand pr1..4 aufweist. Die von den einzelnen Prioritätsvergleichern PV1..4 ausgehenden HOLD-Acknowledge-Signale hlda1..4 werden über jeweils eine Verbindung an einen Steuereingang T der Leitungstreiber LT1..4 rückgeführt. Abhängig von diesem rückgeführten HOLD-Acknowledge-Signal hlda1..4 werden die jeweils einen Leitungstreiber LT1..4 realisierenden Tri-State-Operationsverstärker entweder in den Druchgangs- oder Sperrbetrieb gesteuert. Alle Leitungstreiber LT1..4 als Einheit betrachtet erfüllen die Funktion eines Multiplexers MUX, dessen Eingänge E jeweils über eine Verbindungsleitung mit einem Ausgang A der einzelnen Prioritätenzähler PZ1..4 verbunden sind. Dadurch, daß jeweils nur ein HOLD-Acknowledge-Signal hlda1..4 aktiv ist, wird im Multiplexer MUX einer von den vier Leitungstreibern LT1..4 aktiv geschaltet. Folglich wird derjenige am Ausgang der einzelnen Prioritätenzähler PZ1..4 binäre vorliegende Prioritätenzählerstand pr1..4 an den Ausgang PRT des Multiplexers MUX durchgeschaltet, dessen zugeordnete Einheit SE1..4 aktuell auf den Bus zugreift. Das von der Multiplexerstufe MUX ausgehende ausgewählte Prioritätenzählerstand-Signal prt wird über Verbindungsleitungen an die Prioritäten-Eingänge PI aller Prioritätenzähler PZ1..4 geführt. Deren Takteingänge TE sind wiederum mit dem Systemtakt clk verbunden.

Die von den Ausgängen A der Prioritätenvergleicher PV1..4 ausgehenden HOLD-Acknowledge-Signale hlda1..4 werden zusätzlich über Verbindungsleitungen auf einen Eingang eines ODER-Gatters OR geführt, dessen Ausgang wiederum über Verbindungsleitungen mit dem Eingang einer ersten Kippstufe DFF1 verbunden ist. Der Ausgang Q1 der ersten Kippstufe DFF1 ist mit dem Eingang einer zweiten Kippstufe DFF2 verbunden. Beide Kippstufen werden wiederum mit dem Systemtakt clk getaktet. Das vom Ausgang Q1 der ersten Kippstufe DFF1 ausgehende sowie das von Ausgang Q2 der zweiten Kippstufe DFF2 ausgehende invertierte Signal wird jeweils an einen Eingang eines UND-Gatters AND geführt. Beide Kippstufen DFF1, DFF2 sowie das ODER- und das UND-Gatter OR, AND als funktionale Einheit betrachtet, erfüllen die Funktion eines Flankendetektors FD, der den Anfang eines neuen Bus-Zugriffszyklus erkennt (ansteigende Flanke eines HOLD-Acknowledge-Signals hlda1..4). Das Ausgangssignal zs dieses Flankendetektors FD wird über Verbindungsleitungen zu einem Eingang ZS aller Prioritätenzähler PZ1..4 geleitet. Wird durch die Aktivierung eines HOLD-Acknowledge-Signals hlda1..4 ein neuer Zugriffszyklus erkannt, wird das am Ausgang des Flankendetektors FD erzeugte Signal zs für die Dauer eines Systemtaktes clk auf HIGH-Potential gesetzt. Dies wiederum führt zu einer Aktualisierung der Zählerstände pr1..4 der einzelnen Prioritätenzähler PZ1..4.

So wird innerhalb eines jeden Prioritätenzählers PZ1..4 der am Ausgang A anliegende Prioritätenzählerstand pr1..4 intern mit dem am Eingang PI anliegenden aktiven Priorität prt verglichen. Ist der interne Prioritätenzählerstand pr1..4 kleiner als die Priorität prt der gerade auf den Bus zugreifende Einheit SE1..4, wird der Prioritätenzähler pr1..4 um einen vorgegebenen Wert erhöht. Ist der interne Prioritätenzählerstand pr1..4 jedoch größer als die gerade aktive Priorität prt, bleibt der Prioritätenzählerstand pr1..4 unverändert. Weisen der Prioritätenzählerstand pr1..4 und die aktive Priorität prt den gleichen Wert auf, d.h. die dem Prioritätenzähler PZ1..4 zugeordnete Systemeinheit SE1..4 greift selbst auf den Bus zu, wird der Prioritätenzählerstand pr1..4 auf einen fest vorgegebenen Wert, z.B. den Wert 0, rückgesetzt.

Die in Figur 2 gezeigten Prioritätenzähler PZ1..4 und Prioritätenvergleicher PV1..4 sowie der Flankendetektor FD sind schaltungstechnisch beispielsweise mittels handelsüblicher Kippstufen und logischen Bauelementen wie UND-, ODER-Gatter oder Vergleicher realisiert.

## Patentansprüche

1. Verfahren zum Zuteilen von Zugriffszyklen auf einen Bus (MB) eines Mikroprozessorsystems (MPS), bei dem Zugriffszyklen von mit dem Bus (MB) verbundenen Systemeinheiten (SE1..4) mit Hilfe einer Zuteileinrichtung (ZTE) unter Berücksichtigung aktuell ermittelter Prioritäten (pr1..4) gesteuert werden,
**dadurch gekennzeichnet,**
- daß bei Initialisierung des Mikrocomputersystems (MPS) jeder Systemeinheit (SE1..4) eine unterschiedliche Priorität (pr1..4) zugeordnet wird,
- daß bei jedem Zugriffszyklus
- die Prioritäten (pr1..4) derjenigen Systemeinheiten (SE1..4), deren zugeordnete Priorität (pr1..4) niederwertiger als die Priorität (pr1..4) des aktuellen Zugriffszyklusses ist, erhöht werden,
- die Prioritäten (pr1..4) derjenigen Systemeinheiten (SE1..4), deren zugeordnete Priorität (pr1..4) höher als die Priorität (prt) des aktuellen Zugriffszyklus ist, nicht geändert werden und
- die den aktuellen Zugriffszyklus durchführende Systemeinheit (SE1..4) zugeordnete Priorität (pr1..4) auf einen vorgegebenen Wert zurückgesetzt wird,
- wobei jeweils der einen Zugriffszyklus anfordernden Systemeinheit (SE1..4) mit der höchsten Priorität (pr1..4) der aktuelle Zugriffszyklus zugeteilt wird.

2. Verfahren nach Anspruch 1,
**dadurch gekennzeichnet,**
daß die den Systemeinheiten (SE1..4) zugeordneten Prioritäten (pr1..4) um einen ganzzahligen, vorgegebenen Wert verändert oder auf den Wert Null bzw. einen Maximalwert zurückgesetzt werden.

3. Zuteileinrichtung (ZTE) zum Zuteilen von Zugriffszyklen auf einen Bus eines Mikroprozessorsystems (MPS),
**dadurch gekennzeichnet,**
daß die Zuteileinrichtung (ZTE) zusätzliche Mittel aufweist, die derart ausgestaltet sind,
- daß in einer Zuteileinrichtung (ZTE) Prioritätenzähler (PZ1..4) für die Zuordnung von unterschiedlichen Prioritäten (pr1..4) bei Initialisierung des Mikrocomputersystems (MPS) vorgesehen sind,
- daß in der Zuteileinrichtung (ZTE) den Prioritätenzählern (PZ1..4) Leitungstreiber (LT1..4) und Prioritätenvergleicher (PV1..4) nachgeschaltet und derart ausgestaltet sind,
- daß bei jedem Zugriffszyklus
- die Priorität (pr1..4) derjenigen Systemeinheiten (SE1..4), deren zugeordnete Priorität (pr1..4) niederwertiger als die Priorität (prt) des aktuellen Zugriffszyklusses ist, erhöht werden,
- die Prioritäten (pr1..4) derjenigen Systemeinheiten (SE1..4), deren zugeordnete Priorität (pr1..4) höher als die Priorität (pr1..4) des aktuellen Zugriffszyklus ist, nicht geändert werden und
- die den aktuellen Zugriffszyklus durchführende Systemeinheit (SE1..4) zugeordnete Priorität (pr1..4) auf einen vorgegebenen Wert zurückgesetzt wird,
- wobei jeweils der einen Zugriffszyklus anfordernden Systemeinneit (SE1..4) mit der höchsten Priorität (pr1..4) der aktuelle Zugriffszyklus zugeteilt wird.
